# EUROPÄISCHE PATENTSCHRIFT

(11) **EP 1 393 611 B1**
(45) Veröffentlichungstag und Bekanntmachung des Hinweises auf die Patenterteilung: **16.11.2005**
(21) Anmeldenummer: 03019050.8
(22) Anmeldetag: 22.08.2003
(51) Int. Cl.: A01D 34/416

(54) **Rotierender Schneidkopf, insbesondere für einen Rasentrimmer**
Rotative cutting head, particulary for a lawn trimmer
Tête de coupe rotative, en particulier pour une tondeuse à gazon

(30) Priorität: 26.08.2002 DE 10240596
(43) Veröffentlichungstag der Anmeldung: 03.03.2004
(73) Patentinhaber: GARDENA Manufacturing GmbH, 89079 Ulm (DE)
(72) Erfinder: Gungl, Johannes, 89079 Ulm (DE); Locher, Ottmar, 89079 Ulm (DE)
(74) Vertreter: Patentanwälte Ruff, Wilhelm, Beier, Dauster & Partner

(56) Entgegenhaltungen:
- EP-A- 0 417 967
- EP-A- 0 937 380
- US-A- 4 651 421

## Beschreibung

Die Erfindung betrifft einen rotierenden Schneidkopf mit einem vom Umfang abstehenden Schneidfaden, insbesondere für einen Rasentrimmer, mit einem Gehäuse und einer in diesem koaxial angeordneten und drehbar gelagerten Fadenspule sowie mit einer Arretier- und Nachstelleinrichtung für den Schneidfaden mit einem exzentrisch zur Rotationsachse im Gehäuse gelagerten Schwenkhebel, der aus einer Mitnehmerposition, in der er mit ersten Anschlagflächen mit von der Spule abstehenden Nocken und mit zweiten Anschlagflächen mit am Gehäuse vorgesehenen Anschlägen in Wirkverbindung steht und eine Relativdrehung zwischen Spule und Gehäuse verhindert, fliehkraftabhängig in eine Stellung bringbar ist, in der eine Relativdrehung zwischen Spule und Gehäuse zum Zweck der Fadennachstellung möglich ist.

Ein rotierender Schneidkopf dieser Art ist aus der EP 0 937 380 B1 bekannt. Der dort vorgesehene exzentrisch gelagerte Schwenkhebel ist zweiarmig ausgebildet und besitzt an seinem kürzeren Hebelarm einen Sperrvorsprung, der in der Arretierlage an einer Mitnehmerflanke eines Arretierstiftes der Fadenspule anliegt. Der zweiarmige Hebel ist an seinem längeren Hebelarm mit einem Schaltelement in der Form eines Vorsprunges versehen, das zur Begrenzung der Schwenkbewegung aus der Arretierlage in die Fortschaltlage und zur Rückschwenkung in die Arretierlage von einem Anschlagstift und von den Arretierstiften beaufschlagbar ist. Die Ausgestaltung ist dort derart, dass ein sich betriebsbedingt verkürzender Schneidfaden zu einer höheren Drehzahl des Schneidkopfes führt, die ihrerseits bewirkt, dass der längere Hebelarm radial nach außen und der kleinere Hebelarm mit dem Sperrelement nach innen bewegt wird. Wenn das Sperrelement des Schwenkhebels nicht mehr an einem zugeordneten Arretierstift gehalten ist, können die Fliehkräfte der Schneidfäden die Drehung der Spule und somit eine Fadennachstellung bewirken. Weil sich dann wiederum die Drehzahl erniedrigt, geht der Schwenkhebel wieder in seine Arretierlage zurück.

Die Spule wird dabei durch die Fadenzugkraft relativ zu dem angetriebenen Spulengehäuse beschleunigt, wenn die Weiterschaltung erfolgt. Am Ende des Winkelschrittes der Fortschaltung wird die Spule wieder vom Spulengehäuse mitgenommen, so dass starke Verzögerungskräfte beim Anschlag des Sperrvorsprunges des Schwenkhebels an der Gegenfläche des anderen Bauteils hervorgerufen werden. Dabei wird die bei der Lageveränderung entstehende Rotationsenergie der Spule durch das Schaltelement am längeren Hebelarm des Schwenkhebels abgebremst, dennoch treten ruckartig Verzögerungen auf, welche die Lebensdauer der Einrichtung beeinflussen können.

Bei einer ebenfalls bekannten Lösung (EP 0 417 967 B1) wird ein Zapfen des Schwenkhebels während des Weiterschaltens zwischen zwei unter der Spannung eines elastischen Elementes aufeinander zugedrückten Flanken einer Führungsstruktur geführt, so dass hier durch Reibung schon beim Fortschalten eine mitnehmende Kraft auftritt, welche die Relativgeschwindigkeit zwischen Gehäuse und Spule vermindert. Dennoch wird auch hier ein ruckartiges Einrasten nach der erfolgten Schaltung nicht zu vermeiden sein.

Der vorliegenden Erfindung liegt die Aufgabe zugrunde, die Belastung durch den ruckartigen Wiedereintritt in die Arretierposition so weit wie möglich zu vermeiden.

Zur Lösung dieser Aufgabe wird gemäß dem hauptanspruch bei einem rotierenden Schneidkopf der eingangs genannten Art vorgeschlagen, dass der Schwenkhebel mit einem elastischen Anschlagelement versehen ist, das beim Rückschwenken in die Mitnehmerlage eine gewisse Relativbewegung von Gehäuse und Spule entgegen der Rückstellkraft des Anschlagelementes erlaubt und ein Abfedern der Verzögerungskräfte bewirkt. Diese Ausgestaltung lässt es zu, dass der Hebel, wenn er in die Mitnehmerlage zurückschwenkt und auf die Gegenfläche auftrifft, noch um gewisses Winkelmaß weiter in Einschwenkrichtung bewegt werden kann. Der Anschlag erfolgt daher elastisch, so dass eine Dämpfung des Aufschlages erfolgt, der die Belastung auf die Bauteile deutlich erniedrigt. Es ergibt sich dadurch eine relative Bewegungsfreiheit zwischen Gehäuse und Spule, die bei wenigstens 1,5 %, insbesondere bei wenigstens 3 %, höchstens aber bei 20 % und, bezogen auf einen Winkelschritt der relativen Spulenfortschaltung bei höchstens 10 % liegt.

In Ausgestaltung der Erfindung kann die mit den Nocken der Spule in Wirkverbindung kommende erste Anschlagfläche des Schwenkhebels elastisch nachgiebig angeordnet sein, und der Schwenkhebel kann vorteilhaft auf seinem mit der ersten Anschlagfläche versehenen Hebelteil in der Art einer Gabel ausgebildet werden und einen elastischen Gabelarm aufweisen, der mit der zweiten Anschlagfläche versehen ist.

In Ausgestaltung der Erfindung kann der elastische Gabelarm ein als zweite Anschlagfläche ausgebildetes Auge an seinem freien Ende aufweisen und mit diesem an einem gehäusefesten Anschlag anlegbar sein. In einfacher Weise kann so der Dämpfungseffekt erreicht werden.

In Ausgestaltung der Erfindung kann der elastische Gabelarm auch so ausgebildet sein, dass er bei der Schwenkbewegung des Schwenkhebels als Führungshilfe für den mit den ersten Anschlagflächen versehenen Gabelarm dient. Zu diesem Zweck können in weiterer Ausgestaltung der Erfindung die von der Spule abstehenden Nocken auf ihren in Drehrichtung und entgegen der Drehrichtung weisenden Seiten mit Führungsflächen für die ersten und zweiten Anschlagflächen des Schwenkhebels versehen sein. Die Anordnung des Mitnehmerzapfens und des Rückstellzapfens auf derselben Seite des Schwenkhebels ermöglicht dabei eine besonders günstige Ausnützung der entgegen der Drehrichtung weisenden Vorderflanke der Nocken sowohl für eine stabile Mitnehmerposition als auch für die Rückstellung des Hebels über den Rückstellzapfen. Hierzu ist es vorteilhaft, wenn die Vorderflanke jedes Nockens leicht gekrümmt ist und zwar so, dass die radial außen liegende Kante der Vorderflanke bezüglich der Drehrichtung nicht voreilend ist. Ein Verlauf der Vorderkante mit in Drehrichtung leicht nacheilender Außenkante verbessert das Schaltverhalten und vermeidet unnötige Hebelauslenkungen durch Betriebsschwankungen der Fadenzugkraft. Der Bereich der Vorderflanke, in welchem der Mitnehmerzapfen des Hebels im regulären Betrieb anliegt, verläuft dabei vorteilhafterweise annähernd in einer Radialebene, so dass die auf die Spule ausgeübte antreibende Kraft im wesentlichen tangential wirkt.

Die Erfindung ist anhand eines Ausführungsbeispieles in der Zeichnung dargestellt und soll im nachstehenden erläutert werden. Es zeigen:
- Fig. 1: die schematische Darstellung von Fadenspule und Gehäuse in der Mitnehmerposition, d.h. in der Arretierposition des Schwenkhebels,
- Fig. 2: die Stellung des Schwenkhebels bei nachlassender Fadenzugkraft, d.h. beim Beginn der Schaltung zu einer Relativverdrehung zwischen Spule und Gehäuse,
- Fig. 3: die weitere Auslenkung des Schwenkhebels in die Freigabestellung,
- Fig. 4: den Beginn der Rückschaltung des Schwenkhebels in seine Mitnahmeposition,
- Fig. 5: die weitere Lage des Schwenkhebels zu seiner Rückstellung,
- Fig. 6 bis 8: die Stellungen des Schwenkhebels kurz vor seiner erneuten Mitnehmerposition und
- Fig. 9: die Stellung des Schwenkhebels in seiner erneuten Mitnehmerposition nach der Relativverdrehung zwischen Spule und Gehäuse und nach der elastischen Verformung des entsprechenden Anschlagteiles.

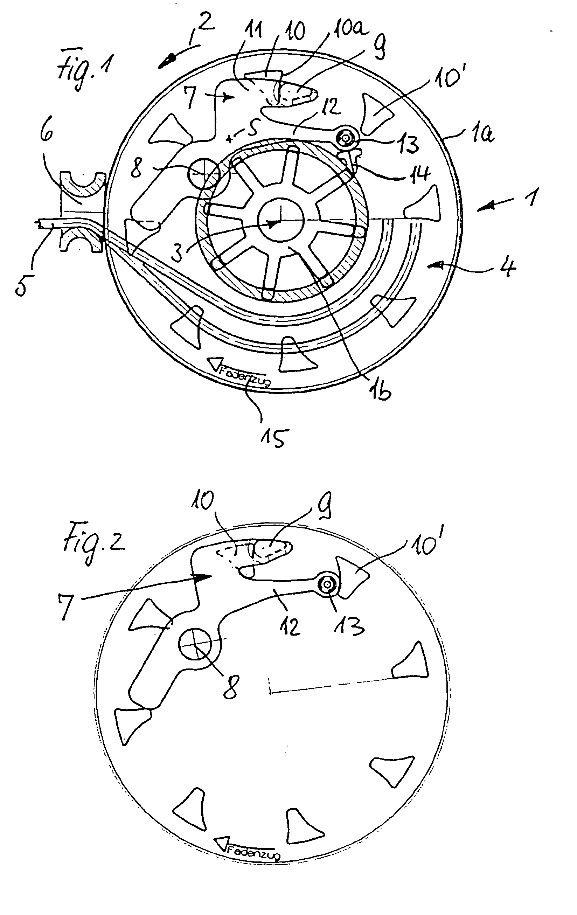

Die Fig. 1 lässt ein Gehäuse 1 mit einer zylindrischen Außenwand 1a und einer inneren Lagerstruktur 1b erkennen. Dieses Gehäuse 1 ist in bekannter und daher auch nicht dargestellter Weise im Sinn des Pfeiles 2 angetrieben und rotiert um die Drehachse 3.

Innerhalb des Gehäuses 1 ist eine Spule 4 ebenfalls um die Drehachse 3 relativ zum Gehäuse 1 verdrehbar gelagert. Diese Spule 4 trägt einen Schneidfaden in aufgewickeltem Zustand, der aus einer Öffnung 6 des Gehäuses 1 nach außen geführt ist und in einer bestimmten Länge frei vom Gehäuse nach außen absteht. Der aufgrund der Fliehkraft nach außen abstehende Schneidfaden 5 wird zum Abmähen von Gras oder anderen Pflanzen verwendet, wie das bei sogenannten Rasentrimmern bekannt ist.

Die Spule 4 ist im Gehäuse 1 an einer Relativdrehung gegenüber dem Gehäuse 1 durch einen Schwenkhebel 7 gehindert, der in Fig. 1 seine Mitnehmerposition einnimmt und Spule 4 und Gehäuse 1 gegeneinander arretiert. Der Schwenkhebel 7 ist am Gehäuse um eine Achse 8 schwenkbar gelagert, die exzentrisch zur Drehachse 3 verläuft. Der Schwenkhebel 7 weist ungleich lange Hebelarme beidseits seiner Schwenkachse 8 auf, so dass sein Schwerpunkt S seitlich von seiner Schwenkachse 8 liegt.

Der Schwenkhebel 7 ist an seinem längeren Hebelteil mit einem Mitnehmerzapfen 9 versehen, der in der in Fig. 1 gezeigten Lage an der ihm zugewandten Flanke 10a eines von mehreren gleichmäßig auf einem Durchmesser der Spule 4 verteilten Nocken 10 anliegt. Der Schwenkhebel 7 ist an seinem längeren Hebelarm gabelförmig ausgebildet und besitzt außer einem ersten hakenartig ausgebildeten Hebelarm 11, der an seinem freien Ende mit dem Mitnehmerzapfen 9 versehen ist, noch einen zweiten Arm 12, an dessen freien Ende ein Auge 13 als Anschlag ausgebildet ist, der in der in Fig. 1 gezeigten Stellung an einem gehäusefesten Gegenanschlag 14 anliegt und zwar in etwa radial innerhalb eines entgegen der Drehrichtung 2 des Gehäuses dem Nocken 11 benachbarten Nocken 10' der Spule 4, der identisch zum Nocken 10 ausgebildet ist. Mit der Spule 4 verbunden sind beim Ausführungsbeispiel acht dieser Nocken 10, die alle auf dem gleichen Durchmesser liegen und jeweils identisch zueinander sind.

In der dargestellten Lage des Schwenkhebels 7 sind, wie vorher ausgeführt, Spule 4 und Gehäuse 1 gegeneinander arretiert, die Spule 4 wird daher im Sinn des Pfeiles 2 von dem angetriebenen Gehäuse 1 mitgenommen. Ihr nach außen abragender Schneidfaden wird mit hoher Geschwindigkeit durch die zu kürzenden Pflanzen geführt.

Bei dieser Art eines Schneidvorganges lässt es sich nicht vermeiden, dass der frei abstehende Teil des Schneidfadens einem Verschleiß unterliegt, dass er dadurch verkürzt wird und eine Fadennachstellung notwendig wird, um den Schneidkreisdurchmesser des Schneidgerätes gleich groß zuhalten.

Wie bei den eingangs erwähnten Schneidgeräten wird dies nun dadurch bewirkt, dass dann, wenn der frei abstehende Teil des Schneidfadens 5 kürzer wird, der Schwenkhebel 7 fliehkraftbedingt - die Zugkraft des inzwischen kürzer gewordenen freien Fadenendes wird kleiner - im Gegenuhrzeigersinn um seine Achse 8 nach außen geschwenkt wird und kommt dabei, wie Fig. 2 zeigt, mit seinem Mitnehmerzapfen 9 in den radial äußeren Bereich der Vorderflanke 10a des Nockens 10 der Spule 4 kommt, der gegenüber dem inneren Bereich der Vorderflanke 10a (siehe die Anlage des Mitnehmerzapfens 9 in Fig. 1) bezogen auf die Drehrichtung 2 etwas nacheilend ausgebildet ist. Die Spule 4 wird daher zunächst entgegen der Fadenzugkraft 15 gedrückt, und es kommt das Auge 13 des zweiten Hebelteils 12 an der Rückflanke des nachfolgenden Nockens 10' zur Anlage.

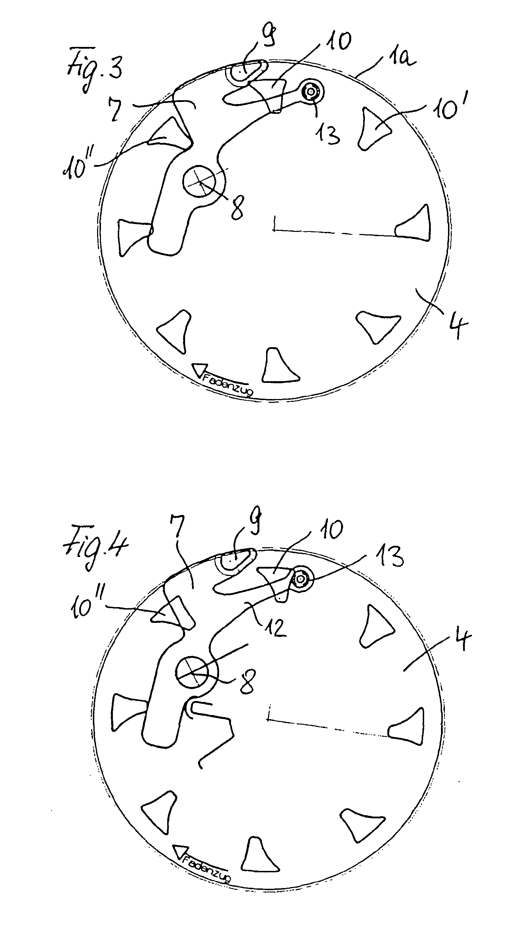

Die Vorderflanke 10a ist im übrigen so ausgebildet, dass der gemäß Fig. 1 zur Anlage am Mitnehmerzapfen 9 kommende Bereich der Vorderflanke 10a im wesentlichen radial verläuft, so dass der Mitnehmerzapfen 9 auf die Spule in tangentialer Richtung wirkt. Der nacheilende Bereich der Vorderflanke 10a verhindert zunächst - Fig. 2 - dass bei im Betrieb auftretender leicht schwankender Fadenzugkraft eine Relativverdrehung zwischen Spule 4 und Gehäuse 1 eintritt. Wenn allerdings die freie Fadenlänge des Schneidfadens 5 verkürzt wird und dadurch die Fadenzugkraft deutlich nachlässt, drückt die Fliehkraft den Schwenkhebel 7 mit seinem Mitnehmerzapfen 9 nach außen, bis der Mitnehmerzapfen 9 die äußere Kante der Vorderflanke 10a überschreitet und der Schwenkhebel 7 in die Position nach Fig. 3 kommt. Die dann erreichte Schwenklage des Schwenkhebels 7 ist begrenzt durch die Anlage des Schwenkhebels 7 oder des Mitnehmerzapfens 9 an der Außenwand 1a des Gehäuses 1.

In der Position nach Fig. 3 liegt daher der Mitnehmerzapfen 9 außerhalb der Bahn der Nocken 10, so dass die Nocken 10 und Mitnehmerzapfen in einer Relativbewegung von Spule 4 und Gehäuse 1 aneinander vorbei gleiten können. Die nach außen tretende freie Länge des Schneidfadens 5 wird dadurch wieder vergrößert und zwar um einen Betrag, der dem Winkelschritt zwischen zwei aufeinander folgenden Nocken 10 entspricht.

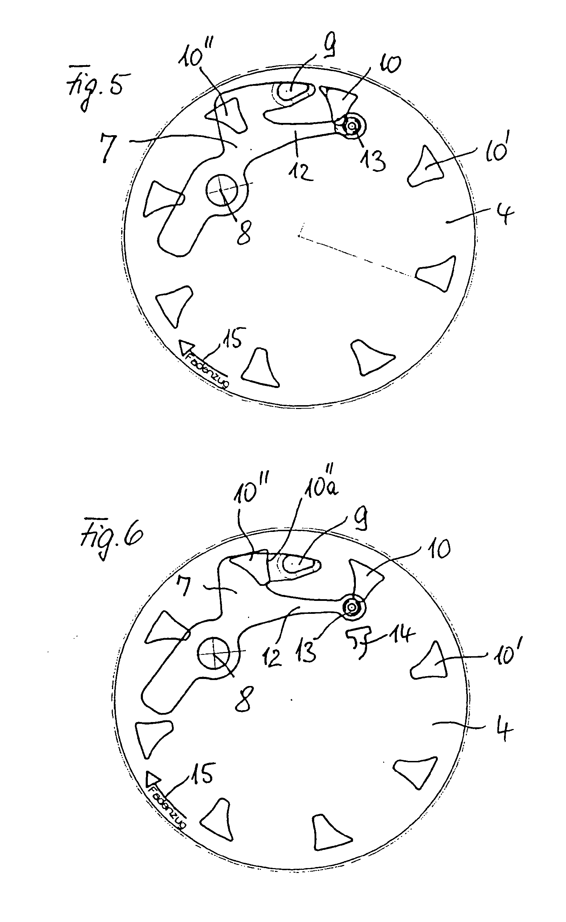

Die Fig. 4 bis 6 zeigen dabei, dass zur Rückschaltung des Schwenkhebels 7 das Auge 13 des zweiten Hebelarmes 12 an der Vorderflanke 10a des Nockens 10 geführt und, da diese zumindest im äußeren Teil gegen die Drehrichtung gekrümmt ist, radial nach innen geführt wird. Der Hebelarm 12 dient daher gemäß den Fig. 4, 5 und 6 zur Rückführung des Schwenkhebels 7 in seine neue Arretierposition, in der der Mitnehmerzapfen 9 zur Anlage an der Vorderflanke 10a" des in der Drehrichtung 2 dem Nocken 10 benachbarten Nocken 10" der Fadenspule 4 zur Anlage kommen soll.

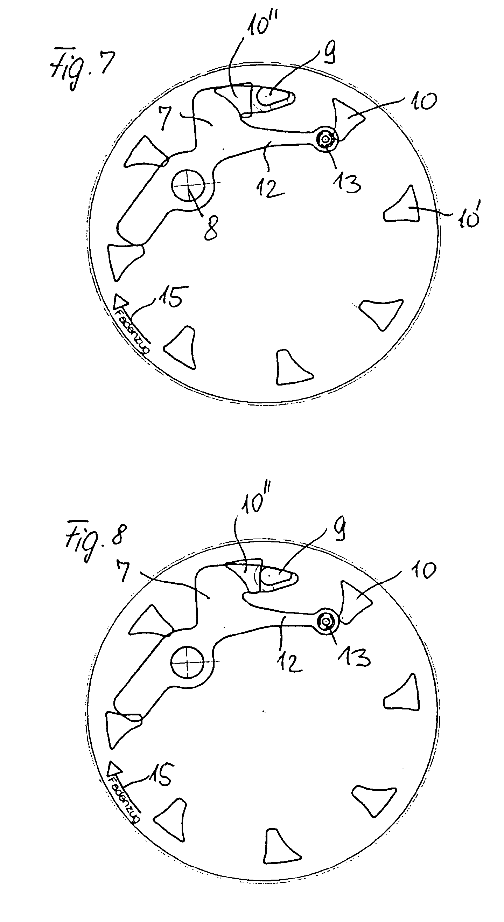

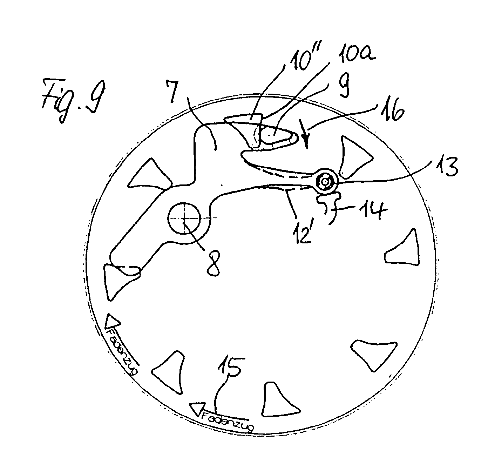

Fig. 7 zeigt die Position, in der das Auge 13 des Hebelarmes 12 schon von dem Nocken 10 frei ist, der Mitnehmerzapfen 9 des Schwenkhebels 7 die Vorderflanke des Nockens 10" aber noch nicht erreicht hat. Aus den Fig. 6, 7 und 8 wird aber deutlich, dass die in dieser Phase auftretende Relativverdrehung zwischen Spule 4 und Gehäuse 1 bedingt durch die Fadenzugkraft 15 erhebliche Beschleunigungskräfte ausübt, die beim Anschlag des Mitnehmerzapfens 9 an die Vorderflanke des Nockens 10"- Fig. 8 - abgebremst werden und zu einer unerwünschten schlagartigen Verzögerung führen würden.

Um diese Verzögerungskräfte abzudämpfen ist nun erfindungsgemäß vorgesehen, den Hebelarm 12 des Schwenkhebels 7 so auszubilden, dass er elastisch so weit deformierbar ist, dass der Mitnehmerzapfen 9 im Sinn des Pfeiles 16 um einen gewissen Betrag entlang der Vorderflanke 10a des Nockens 10" radial nach innen gleiten kann, was wiederum mit einer geringen relativen zusätzlichen Verdrehung von Spule 4 und Gehäuse 1 verbunden ist. Dies kann beispielsweise dadurch erreicht werden, dass die Materialstärke eines zur Herstellung verwendeten Kunststoffmaterials entsprechend geringer als beim Hebelarm 11 gewählt wird.

Fig. 9 zeigt, dass sich der Hebelarm 12 zu der Gestalt 12' verformen kann, wenn sein am freien Ende angeordnetes Auge 13 auf den gehäusefesten Anschlag 14 auftrifft. Diese Verformung erlaubt daher das vorher erwähnte Entlanggleiten des Mitnehmerzapfens 9 am Nocken 10" und die dadurch bedingte geringfügige Verdrehung zwischen Spule und Gehäuse.

Diese zusätzliche Verdrehung ist ein wichtiger Effekt, um den Verzögerungsweg zu verlängern und Kraftspitzen deutlich abzusenken. Die statische Deformation des Hebelarmes 12, bei gleichmäßiger Rotation von Spule 4 und Gehäuse 1, ist gering gegenüber der dynamischen Deformation beim Auftreffen des Mitnehmerzapfens 9 auf die Vorderflanke des Nockens 10". Die elastische Nachgiebigkeit des Hebelarmes 12 ermöglicht aber ein Abfedern der beim Auftreffen des Mitnehmerzapfens 9 auf die Vorderflanke des Nockens 10" kurzzeitig hohen Verzögerungs- bzw. Beschleunigungskraft.

Ein weiterer Effekt kommt insofern dazu, als durch das Auftreffen des Auges 13 auf die Vorderflanke des Nockens 10 (Fig. 4) bereits eine deutliche Abbremsung der Relativbewegung von Spule 4 und Gehäuse 1 erreicht wird. Die Anordnung des Mitnehmerzapfens 9 und des als Rückstellzapfen wirkenden Auges 13 auf derselben Seite des Schwenkhebels 7 ermöglicht so eine besonders günstige Ausnützung der Vorderflanke eines Nockens für eine stabile Mitnehmerposition und für eine Rückstellung des Schwenkhebels 7 aus seiner Freigabestellung in die Arretierstellung.

Wie die Zeichnungen zeigen ist beim Ausführungsbeispiel zu diesem Zweck die Vorderflanke 10a leicht gekrümmt. Die Krümmung soll dabei in der Weise ausgebildet sein, dass die radial außen liegende Kante der Vorderflanke 10a bezogen auf die Drehrichtung 2 nicht voreilend ist. Ein Verlauf der Vorderkante 10a mit bezogen auf die Drehrichtung 2 leicht nacheilender Außenkante kann das Schaltverhalten verbessern und unnötige Hebelauslenkungen durch Betriebsschwankungen der Fadenzugkraft vermeiden. Wie vorher bereits ausgeführt ist, ist der Bereich der Vorderflanke 10a, an welchem der Mitnehmerzapfen 9 des Schwenkhebels 7 im regulären Betrieb arretierend anliegt, annähernd in einer Radialebene angeordnet, so dass die auf die Spule ausgeübte antreibende Kraft, die vom Gehäuse 1 ausgeht, im wesentlichen tangential wirkt.

## Patentansprüche

1. Rotierender Schneidkopf mit einem vom Umfang abstehenden Schneidfaden (5), insbesondere für einen Rasentrimmer, mit einem Gehäuse (1) und einer in diesem koaxial angeordneten und drehbar gelagerten Fadenspule (4), sowie mit einer Arretier- und Nachstelleinrichtung für den Schneidfaden mit einem exzentrisch zur Rotationsachse (3) im Gehäuse (1) gelagerten Schwenkhebel (7), der aus einer Mitnehmerposition, in der er mit ersten Anschlagflächen (9) mit von der Spule (4) abstehenden Nocken (10) und mit zweiten Anschlagflächen (13) mit am Gehäuse (1) vorgesehenen Anschlägen (14) in Wirkverbindung steht und eine Relativdrehung zwischen Spule und Gehäuse verhindert, fliehkraftabhängig in eine Stellung bringbar ist, in der eine Relativdrehung zwischen Spule (4) und Gehäuse (1) zum Zweck der Fadennachstellung möglich ist,
**dadurch gekennzeichnet,dass**
der Schwenkhebel (7) mit einem elastischen Anschlagelement (12, 13) versehen ist, das beim Rückschwenken in die Mitnehmerposition eine Relativbewegung von Gehäuse (1) und Spule (4) entgegen der Rückstellkraft des Anschlagelementes (12, 13) erlaubt und ein Abfedern der Verzögerungskräfte bewirkt.

2. Schneidkopf nach Anspruch 1, **dadurch gekennzeichnet, dass** die mit den Nocken (10) der Spule (4) in Wirkverbindung kommende erste Anschlagfläche (9) des Schwenkhebels (7) elastisch nachgiebig angeordnet ist.

3. Schneidkopf nach Anspruch 2, **dadurch gekennzeichnet, dass** der Schwenkhebel (7) auf seinem mit der ersten Anschlagfläche (9) versehenen Hebelteil in der Art einer Gabel ausgebildet ist und einen elastischen Gabelarm (12) aufweist, der mit der zweiten Anschlagfläche (13) versehen ist.

4. Schneidkopf nach einem der Ansprüche 1 bis 3, **dadurch gekennzeichnet, dass** die relative Bewegungsfreiheit zwischen Gehäuse (1) und Spule (4), die durch das elastische Anschlagelement erreicht wird, bei wenigstens 1,5 %, insbesondere bei wenigstens 3 % und bei höchstens 20 %, insbesondere bei höchstens 10 % eines Winkelschrittes der relativen Spulenfortschaltung liegt.

5. Schneidkopf nach Anspruch 3, **dadurch gekennzeichnet, dass** der elastische Gabelarm (12) ein als zweite Anschlagfläche ausgebildetes Auge (13) an seinem freien Ende aufweist und mit diesem an einem gehäusefesten Anschlag (14) anlegbar ist.

6. Schneidkopf nach Anspruch 3, **dadurch gekennzeichnet, dass** der elastische Gabelarm (12) so ausgebildet und angeordnet ist, dass er bei der Rückschwenkbewegung des Schwenkhebels (7) in seine Mitnehmerposition als Führungshilfe für den mit der ersten Anschlagfläche versehenen Gabelarm (11) dient.

7. Schneidkopf nach Anspruch 3, **dadurch gekennzeichnet, dass** die von der Spule (4) abstehenden Nocken (10) auf ihren in Drehrichtung (2) und entgegen der Drehrichtung weisenden Flanken mit Führungsflächen für die ersten und zweiten Anschlagflächen des Schwenkhebels (7) versehen sind.

8. Schneidkopf nach Anspruch 7, **dadurch gekennzeichnet, dass** der radial äußerste Bereich der Vorderflanke (10a) der Nocken (10) bezogen auf die Drehrichtung (2) nicht voreilend ausgebildet ist.

## Claims

1. Rotary cutting head with a cutting cord (5) projecting from the circumference, particularly for a lawn trimmer, having a casing (1) and a cord spool (4) mounted in rotary, coaxial manner therein, as well as with a locking and adjusting device for the cutting cord with a pivot lever (7) mounted eccentrically to the rotation axis (3) in casing (1) and which in centrifugal force-dependent manner can be brought from a drive position where with first stop faces (9) it is in operative connection with cams (10) projecting from the spool (4) and with second stop faces (13) with stops (14) provided on casing (1) and preventing a relative rotation between spool and casing into a position where a relative rotation between spool (4) and casing (1) is possible for cord adjustment purposes, **characterized in that** the pivot lever (7) is provided with an elastic stop member (12, 13), which during pivoting back into the drive position, allows a relative movement of casing (1) and spool (4) counter to the restoring force of the stop member (12, 13) and brings about an absorption of the retarding forces.

2. Cutting head according to claim 1, **characterized in that** the first stop face (9) of the pivot lever (7) coming into operative connection with the cams (10) of spool (4) is positioned in elastically flexible manner.

3. Cutting head according to claim 2, **characterized in that** the pivot lever (7) on its lever part provided with the first stop face (9) is constructed in the manner of a fork and has an elastic fork arm (12) provided with the second stop face (13).

4. Cutting head according to one of the claims 1 to 3, **characterized in that** the relative freedom of movement between casing (1) and spool (4) achieved through the elastic stop member is at least 1.5%, particularly at least 3% and at the most 20%, particularly at the most 10% of an angular step of the relative spool advance.

5. Cutting head according to claim 3, **characterized in that** the elastic fork arm (12) has at its free end a lug (13) constructed as the second stop face and can be applied therewith to a casing-fixed stop (14).

6. Cutting head according to claim 3, **characterized in that** the elastic fork arm (12) is so constructed and positioned that during the pivoting back movement of the pivot lever (7) into its drive position it serves as a guidance aid for the fork arm (11) provided with the first stop face.

7. Cutting head according to claim 3, **characterized in that** on their flanks pointing in and counter to the rotation direction (2), the cams (10) projecting from the spool (4) are provided with guidance faces for the first and second stop faces of the pivot lever (7).

8. Cutting head according to claim 7, **characterized in that** the radially outermost area of the front flank (10a) of cams (10) does not lead with respect to the rotation direction (2).

## Revendications

1. Tête de coupe rotative avec un fil de coupe (5) faisant saillie de la circonférence, en particulier pour un coupe-gazon, avec un carter (1) et une bobine de fil (4) coaxialement disposée dans celui-ci et logée de manière à pouvoir tourner, et avec un dispositif de blocage et de réglage pour le fil de coupe avec un levier oscillant (7) logé excentriquement à l'axe de rotation (3) dans le carter (1), lequel, à partir d'une position d'entraînement où il est en liaison active par de premières surfaces de butée (9) avec des cames (10) faisant saillie de la bobine (4) et par de deuxièmes surfaces de butée (13) avec des butées (14) prévues sur le carter (1) et où il empêche une rotation relative entre la bobine et le carter, peut être amené par force centrifuge dans une position où une rotation relative entre la bobine (4) et le carter (1) est possible aux fins de réglage du fil,
**caractérisée en ce que**
le levier oscillant (7) est muni d'un élément de butée élastique (12, 13) permettant un mouvement relatif du carter (1) et de la bobine (4) opposé au sens de la force de rappel de l'élément de butée (12, 13) lors du pivotement de rappel en position d'entraînement, et entraînant un amortissement élastique des efforts retardateurs.

2. Tête de coupe selon la revendication 1, **caractérisée en ce que** la première surface de butée (9) du levier oscillant (7) mise en liaison active avec les cames (10) de la bobine (4) est disposée de manière élastiquement souple.

3. Tête de coupe selon la revendication 2, **caractérisée en ce que** le levier oscillant (7) est formé à la manière d'une fourche sur la partie de levier munie de la première surface de butée (9), et présente un bras de fourche élastique (12) muni de la deuxième surface de butée (13).

4. Tête de coupe selon l'une des revendications 1 à 3, **caractérisée en ce que** la liberté de mouvement relative entre le carter (1) et la bobine (4) obtenue par l'élément de butée élastique, représente au minimum 1,5 %, notamment 3 % au minimum, et au maximum 20 %, notamment 10 % au maximum, d'un pas angulaire de l'avance relative de bobine.

5. Tête de coupe selon la revendication 3, **caractérisée en ce que** le bras de fourche élastique (12) présente à son extrémité libre un oeil (13) formé comme deuxième surface de butée et qu'il est applicable avec celui-ci contre une butée (14) fixe du carter.

6. Tête de coupe selon la revendication 3, **caractérisée en ce que** le bras de fourche élastique (12) est formé et disposé de manière à servir d'auxiliaire de guidage pour le premier bras de fourche (11) muni de la première surface de butée lors du mouvement de pivotement de rappel du levier oscillant (7) dans sa position d'entraînement.

7. Tête de coupe selon la revendication 3, **caractérisée en ce que** les cames (10) faisant saillie de la bobine (4) sont munies sur leurs flancs orientés vers le sens de rotation (2) ou opposés à celui-ci de surfaces de guidage pour les premières et deuxièmes surfaces de butée du levier oscillant (7).

8. Tête de coupe selon la revendication 7, **caractérisée en ce que** la région radialement extérieure du flanc frontal (10a) des cames (10) n'est pas formée de manière à être décalée vers l'avant par rapport au sens de rotation (2).
